# FASCICULE DE BREVET EUROPEEN

(11) **EP 4 457 141 B1**
(45) Date de publication et mention de la délivrance du brevet: **18.02.2026**
(21) Numéro de dépôt: 22847615.6
(22) Date de dépôt: 26.12.2022
(51) Int. Cl.: B64D 27/24

(54) **SYSTÈME DE PROPULSION ÉLECTRIQUE POUR UN AÉRONEF**
ELEKTRISCHES ANTRIEBSSYSTEM FÜR EIN FLUGZEUG
ELECTRIC PROPULSION SYSTEM FOR AN AIRCRAFT

(30) Priorité: 27.12.2021 FR 2114560
(43) Date de publication de la demande: 06.11.2024
(73) Titulaire: Safran Electrical & Power, 31702 Blagnac Cedex (FR)
(72) Inventeur: VALIRE, Jérôme, 31702 BLAGNAC CEDEX (FR); CORNU, Quentin, 31702 BLAGNAC CEDEX (FR)
(74) Mandataire: Ernest Gutmann - Yves Plasseraud S.A.S.
(86) Numéro de dépôt international: PCT/FR2022/052507
(87) Numéro de publication internationale: WO 2023/126610

(56) Documents cités:
- EP-A1- 3 657 468
- FR-A1- 3 065 840
- US-A1- 2019 393 809

## Description

### Domaine technique de l'invention

L'invention concerne un système de propulsion électrique pour un aéronef. Un tel système est notamment installé sur un aéronef à propulsion uniquement électrique, par exemple un avion.

### Etat de la technique antérieure

Les aéronefs utilisant une propulsion employant pour seule énergie de l'énergie électrique stockée dans des batteries ou d'autres éléments de stockage, doivent comprendre une architecture électrique de connexion capable de gérer les flux d'énergie des éléments de stockage vers les moteurs électriques quelles que soient les conditions d'utilisations et les éventuelles pannes.

Les réseaux de distribution d'énergie électrique embarqués sur la plupart des aéronefs actuels, destinés à l'alimentation des circuits secondaires (ventilation, éclairage, chauffage...), comprennent généralement un réseau alternatif avec des tensions alternatives de 115 V ou 230 V par exemple, et /ou un réseau à basse tension continue de 28 V. Les puissances électriques en jeu vont généralement de 50 à 500 kW.

Un aéronef à propulsion électrique nécessite une puissance électrique plus importante, et opèrent à des tensions continues plus élevées, de l'ordre de 400 à 1000 V. Pour ces aéronefs à propulsion électrique, il est nécessaire de définir de nouvelles architectures de distribution électrique. Aujourd'hui, deux topologies d'architecture de distribution sont étudiées : les architectures ségréguées et les architectures distribuées.

Les architectures ségrégées comprennent plusieurs canaux de distribution parallèles électriquement disjoints, comprenant chacun un bus d'alimentation reliant une source d'énergie à un ou plusieurs moteurs respectifs.

Dans une telle architecture, la perte d'une source d'énergie entraîne inévitablement la perte du ou des moteur(s) associé(s). En fonction du type d'aéronef et du type de système propulsif, il est possible que le système intègre une possibilité de redirection du ou des moteurs vers une source d'énergie secondaire de secours, de même type que la source principale ou d'un type différent (on parle alors d'architecture hybride).

Cependant, un tel système redondant entraîne un encombrement et une masse embarquée augmentés, en multipliant les bus de connexion et, le cas échéant, les sources secondaires qui ne sont pas utilisées en fonctionnement normal.

Les architectures distribuées cherchent à réduire ce problème d'encombrement et de masse, qui est particulièrement critique pour une utilisation sur un aéronef.

Dans ce type d'architecture, les sources sont connectées en parallèle sur un bus d'alimentation commun desservant tous les moteurs. En mode nominal, les tensions entre les différentes batteries s'équilibrent de sorte que les batteries alimentent de manière partagée les différentes charges. En cas de perte d'une batterie, les charges propulsives sont alimentées par les batteries restantes.

Ceci permet de dimensionner les batteries au plus près du fonctionnement nominal, et ainsi d'optimiser la masse des batteries. Le réseau de distribution électrique devient également plus intégré car le bus de distribution associe plusieurs charges à plusieurs batteries.

Un défaut important des architectures distribuées est la gestion des incidents, et en particulier la vulnérabilité aux courts-circuits.

En effet, en cas de court-circuit, une batterie peut délivrer en quelques millisecondes un courant de quelques milliers d'ampères. Lorsque les batteries sont connectées en parallèle sur le réseau, le phénomène est multiplié par le nombre de batteries en parallèle.

La première conséquence, directe, est que les courants mis en jeu dans ce type de court-circuit peuvent être destructifs pour les composants aéronautiques, et les solutions de protection active ne sont pas capables d'isoler le défaut.

La seconde conséquence est liée à la nature de l'architecture de distribution distribuée. En effet, contrairement à une architecture de distribution ségréguée, qui ne propage pas les conséquences d'un court-circuit à l'ensemble du réseau propulsif, dans ce type d'architecture, la tension du réseau perçue par tous les moteurs va s'écrouler sur une durée suffisamment longue pour causer la perte inacceptable de la propulsion de l'aéronef, tous les moteurs liés au bus n'étant plus alimentés du fait d'une mise en protection automatique liée à un niveau de tension de bus trop faible.

Les documents EP3657468A1 et US2019393809A1 divulguent des systèmes d'architecture électrique pour aéronefs.

### Présentation de l'invention

L'invention vise à remédier à ces inconvénients, en proposant une architecture de réseau électrique de propulsion permettant la reprise des charges propulsive en cas de perte d'une des sources d'énergie, sans encombrement excessif et palliant les risques associés à une architecture distribuée.

A cet effet, l'invention a pour objet un système de propulsion électrique pour un aéronef, le système comprenant une pluralité de branches, chaque branche comprenant :
- au moins une source d'énergie électrique,
- au moins un dispositif de propulsion électrique, et
- un bus de branche, connecté à chaque source et à chaque dispositif de propulsion de la branche,
que le système de propulsion comprenant de plus un bus central, chaque branche comprenant un convertisseur de tension continue connectant le bus de branche au bus central, ledit convertisseur de tension continue étant configuré pour isoler galvaniquement ledit bus de branche du bus central.

Un tel système permet d'alimenter en énergie une pluralité de moteurs électrique pour la propulsion d'un aéronef, en permettant la reprise des moteurs d'une branche en cas de défaillance de la source d'énergie correspondante, tout en étant protégée contre les risques de propagation de courts-circuits.

Le système peut comprendre en outre une source de secours d'énergie électrique connectée au bus central.

Une telle caractéristique permet de compenser la perte d'une source d'énergie en cas de défaillance et ainsi de maintenir un niveau de tension suffisant dans chaque dispositif de propulsion en répartissant la tension à travers le bus central.

Chaque dispositif de propulsion peut être connecté à l'un des bus de branche par l'intermédiaire d'un organe de disjonction.

Une telle caractéristique permet une protection individuelle du dispositif de propulsion contre les sur-courants.

Chaque bus de branche peut être connecté au bus central par :
- un organe de commutation de branche de type contacteur ou de type interrupteur de puissance à semi-conducteur, et
- une diode présentant un sens passant orienté du bus central vers le bus de branche,
l'organe de commutation de branche et la diode étant branchés en série entre le bus central et le bus de branche, en parallèle du convertisseur de tension continue.

Une telle caractéristique permet de redistribuer une part de la puissance électrique dans chaque branche pour alimenter les dispositifs de propulsion d'une branche dont la source est défaillante, sans risquer de courants en retour.

Chaque source d'énergie peut être connectée au bus de branche correspondant par l'intermédiaire d'un organe de commutation de source de type contacteur ou de type interrupteur de puissance à semi-conducteur.

Cette caractéristique permet d'isoler une source défaillante en vue de relancer la branche.

Le système peut comprendre un circuit de contrôle configuré pour mettre en œuvre un procédé de gestion de défaillance en cas de défaillance dans le système.

Une telle caractéristique permet de protéger le système de propulsion contre des incidents variés en conservant des capacités optimales selon les cas de figure.

L'invention concerne également un procédé de gestion de défaillance dans un système de propulsion électrique pour aéronef comme plus haut, comprenant des étapes de :
- prévention d'une propagation de la défaillance au moyen d'une isolation galvanique mise en oeuvre par chaque convertisseur de tension continue,
- localisation de la défaillance et, si nécessaire, isolation d'une source ou d'un dispositif de propulsion, et
- le cas échéant, précharge puis relance de dispositifs de propulsions arrêtés.

Le procédé peut comprendre la commutation d'au moins un organe de commutation de source et/ou d'au moins un organe de commutation de branche.

Le procédé peut comprendre l'ouverture d'au moins un organe de disjonction.

L'invention concerne également un aéronef comprenant un système de propulsion électrique comme plus haut.

### Brève description des figures

[Fig. 1] la figure 1 est une vue schématique d'un système de propulsion électrique selon l'invention,
[Fig. 2] [Fig. 3] [Fig. 4] les figures 2 à 4 représentent des étapes successives d'un procédé de gestion d'une défaillance dans une région source du système de propulsion de la figure 1,
[Fig. 5] [Fig. 6] [Fig. 7] les figures 5 à 7 représentent des étapes successives d'un procédé de gestion d'une défaillance dans une région bus du système de propulsion de la figure 1,
[Fig. 8] [Fig. 9] [Fig. 10] les figures 8 à 10 représentent des étapes successives d'un procédé de gestion d'une défaillance dans une région moteur du système de propulsion de la figure 1, et
[Fig. 11] la figure 11 représente un procédé de gestion d'une défaillance dans une région centrale du système de propulsion de la figure 1.

### Description détaillée de l'invention

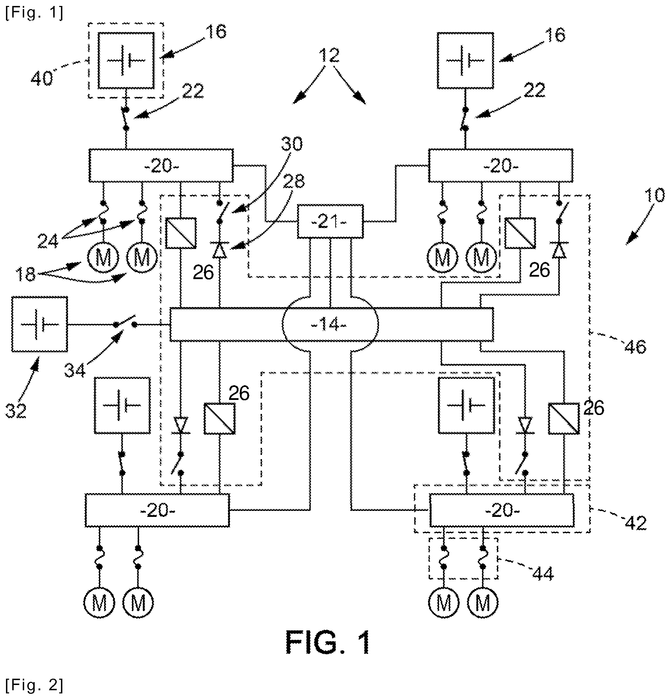

Un système de propulsion 10 électrique selon l'invention est représenté sur la figure 1. Le système de propulsion 10 est destiné à propulser un aéronef de manière indépendante, c'est-à-dire que l'aéronef est à propulsion électrique uniquement.

Le système de propulsion 10 comprend une pluralité de branches 12, par exemple quatre branches 12 dans le cas représenté, ainsi qu'un bus central 14.

Chaque branche comprend une source 16 d'énergie électrique, au moins un dispositif de propulsion 18 électrique et un bus de branche 20 connecté à ladite source 16 et à chaque dispositif de propulsion 18.

Les sources 16 sont par exemple des batteries embarquées sur l'aéronef, qui alimentent le réseau électrique primaire, destinée à la propulsion.

Les dispositifs de propulsion 18 sont par exemple des moteurs électriques installés dans des turbomachines propulsant l'aéronef.

Le bus central 14 et les bus de branche 20 sont des dispositifs de distribution d'énergie électrique entre plusieurs composants, sous haute tension et à courant continu, installés dans des boitiers sécurisés. Ils comprennent également des connecteurs logiques reliés à un circuit de contrôle 21.

Chaque source 16 est connectée au bus de branche 20 par une ligne électrique protégée comprenant un organe de commutation de source 22.

L'organe de commutation de source 22 est par exemple du type contacteur ou bien du type interrupteur de puissance à semi-conducteur. Un tel organe de commutation est adapté pour commuter même lorsqu'il est parcouru par un courant électrique d'intensité relativement élevée.

Chaque dispositif de propulsion 18 est connecté au bus de branche 20 correspondant par une ligne électrique respective, comprenant un organe de disjonction 24, par exemple de type thermofusible. L'organe de disjonction 24 est adapté pour déconnecter de manière passive le dispositif de propulsion 18 du bus de branche 20 en cas de sur-courant le traversant, ou bien de manière contrôlée par le dispositif de commande 21.

Chaque bus de branche 20 est connecté au bus central 14 par l'intermédiaire d'un convertisseur de tension continue 26 et, arrangés en parallèle dudit convertisseur de tension 26, une diode 28 et un organe de commutation de branche 30.

Le convertisseur de tension continue 26 est adapté pour isoler galvaniquement le bus de branche 20 du bus principal 14.

La diode 28 est agencés avec un sens passant orienté du bus central 14 vers le bus de branche 20 correspondant. La diode 28 et l'organe de commutation de branche 30 forment ensemble un circuit de transfert d'énergie électrique à sens unique, du bus central 14 vers la branche 12 correspondante.

L'organe de commutation de branche est ouvert en fonctionnement normal du système 10.

Le dispositif de propulsion 10 comprend en outre une source de secours 32 connectée au bus central 14 par l'intermédiaire d'un commutateur de secours 34.

La source de secours 32 est configurée pour fournir de l'énergie en cas de défaillance d'une des sources 16, de manière à compenser la perte. Les tensions dans les différents dispositifs de propulsion 18 sont équilibrées à travers le bus central 14.

Le circuit de contrôle 21 comprend des cartes électroniques et des capteurs de courant et de tension distribués sur l'ensemble du système de propulsion, afin de protéger l'ensemble du réseau et de mettre en oeuvre des procédés de gestion de défaillance décrits plus bas.

On définit pour cela quatre régions du système de propulsion 10 dans lesquelles une défaillance peut advenir.

Une région source 40 comprend les sources d'énergie 16 et toute la ligne électrique en amont de l'organe de commutation de source 22.

Une région bus 42 comprend les bus de branche 20 et les lignes de connexion au bus central 14.

Une région moteur 44 comprend les lignes de connexion des dispositifs de propulsion 18 au bus de branche 20 associé.

Enfin, une région centrale 46 comprend le bus central 14, les lignes de connexion de ce bus central 14 aux bus de branche 20, et les convertisseurs de tension continue et les circuits de distribution associés.

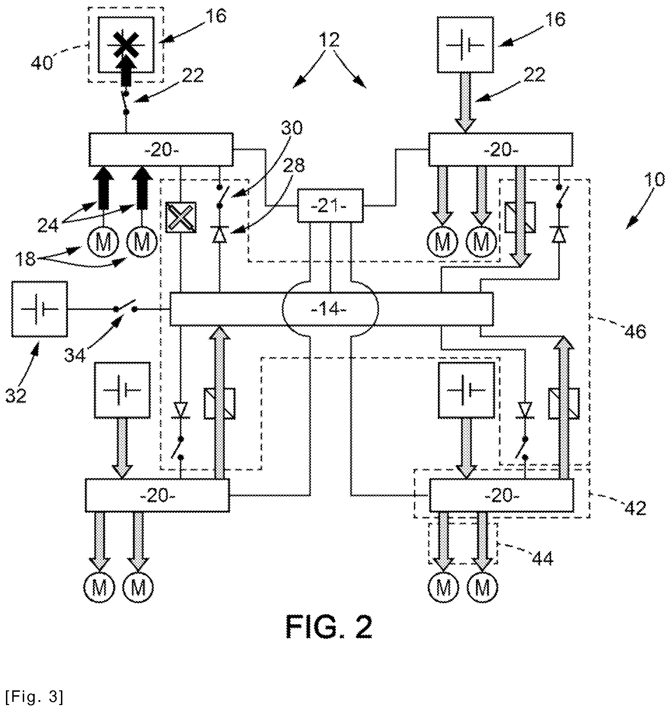

On décrit premièrement un procédé de gestion de défaillance intervenant dans la région source 40. Sur les figures 2 à 11, les flèches grisées désignent un courant normal correspondant à un fonctionnement standard du système 10. Les flèches noires désignent un courant anormal, notamment un courant de court-circuit, et les flèches blanches un courant de correction, mis en place pour pallier des défauts du système 10.

Le défaut est par exemple un court-circuit, qui est alimenté par la source 16 de la branche 12 et les dispositifs de propulsion 18, qui fournissent de l'énergie par leurs capacités d'entrée, comme représenté sur la figure 2.

Grâce à l'isolation galvanique mise en oeuvre par le convertisseur de tension continue 26 de la branche 12, seule la source 16 de la branche alimente le court-circuit, les autres branches 12 étant isolées.

Au cours d'une première étape, le circuit de contrôle 21 détecte la défaillance à l'aide des capteurs de courant et de tension de la branche 12, et stoppe la régulation mise en oeuvre par le convertisseur de tension continue 26, afin de stopper la distribution d'énergie dans les dispositifs de propulsion 18 de la branche 12.

En parallèle, ces dispositifs de propulsion 18 de la branche 12 sont également arrêtés le temps nécessaire pour isoler la défaillance.

Le fonctionnement des autres branches 12 continue de manière inchangée, assurant la propulsion de l'aéronef.

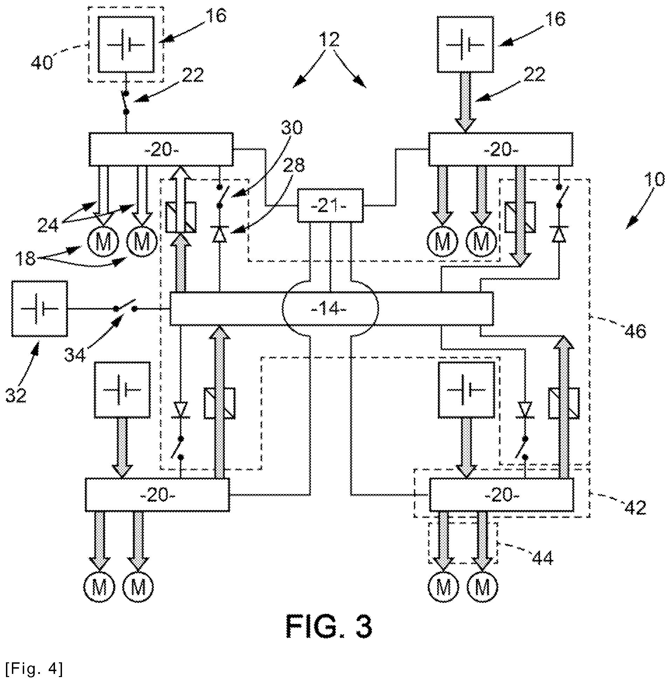

Au cours d'une deuxième étape, représenté sur la figure 3, la source 16 de la branche 12 est isolée par la commutation de l'organe de commutation de source 22 associé par le circuit de contrôle 21.

Une fois la défaillance isolée, le circuit de contrôle 21 relance la régulation par le convertisseur de tension continue 26 de la branche 12, afin de permettre une précharge des dispositifs de propulsion 18.

En effet, une telle précharge est nécessaire avant de redémarrer les dispositifs de propulsion 18, dont la tension a chuté drastiquement.

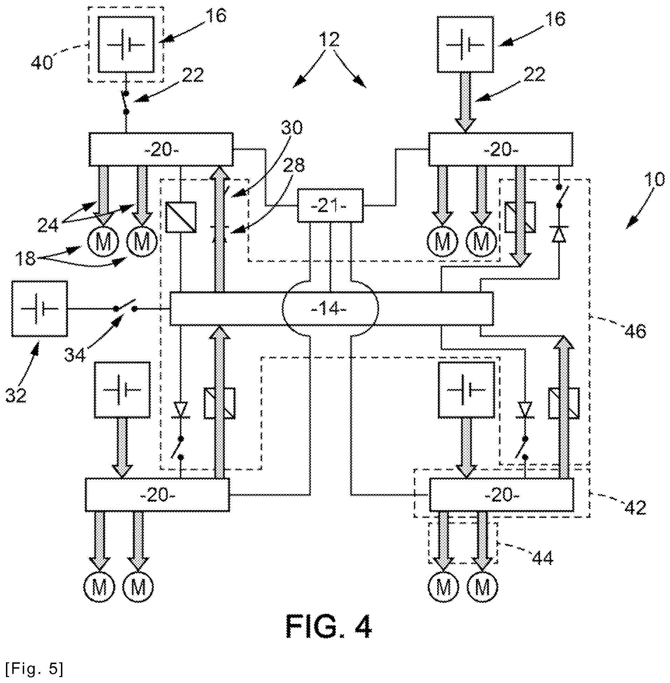

Enfin, une fois la précharge terminée, l'organe de commutation de branche 30 est fermé afin de transmettre une puissance venant des convertisseurs de tension continue 26 des autres branches 12, pour réalimenter les dispositifs de propulsion 18 de la branche défaillante, comme représenté sur la figure 4.

La puissance supplémentaire délivrée par chaque autre branche 12 pour alimenter les dispositifs de propulsion 18 de la branche défaillante est divisée par le nombre de branches restantes, ce qui réduit la charge individuelle sur chaque source 16.

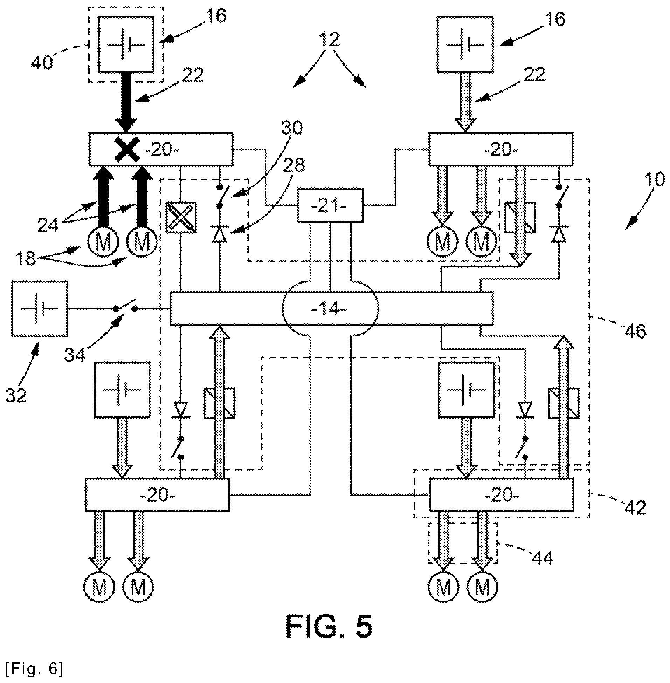

On décrit deuxièmement un procédé de gestion de défaillance intervenant dans la région bus 42, représenté sur la figure 5.

Lorsqu'un défaut électrique apparaît au niveau d'un bus de branche 20, la première conséquence résultant de ce défaut est l'élévation du courant délivré par la source 16.

Comme précédemment, les sources 16 et les capacités d'entrée des dispositifs de propulsion 18 délivrent de l'énergie électrique dans le court-circuit.

Tout comme dans le cas précédent, l'isolation galvanique du convertisseur de tension continue 26 de la branche 12 permet de prévenir la propagation du défaut aux autres branches 12.

Le circuit de contrôle 21 détecte la présence d'un court-circuit dans la branche 12 à l'aide des capteurs de courant et de tension, et stoppe la régulation mise en oeuvre par le convertisseur de tension continue 26, afin de stopper la distribution d'énergie dans les dispositifs de propulsion 18 de la branche 12.

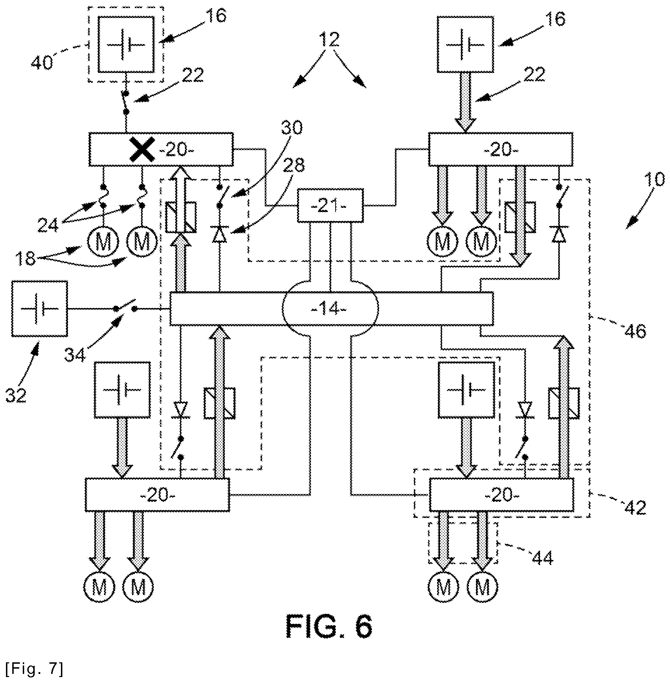

Au cours d'une deuxième étape, représenté sur la figure 6, le circuit de contrôle 21 isole la source 16 pour stopper la circulation de courant dans le court-circuit, en commutant l'organe de commutation de source 22. En parallèle, les tensions de consignes des dispositifs de propulsion 18 sont mises à zéro.

Afin de déterminer la localisation du défaut, le circuit de contrôle 21 entame une séquence de précharge via le convertisseur de tension continue 26, comme précédemment. Comme le défaut est localisé sur le bus de branche 20, la précharge ne fonctionne pas et la tension vue par les dispositifs de propulsion 18 n'augmente pas suffisamment. AU cours de la précharge, l'isolation galvanique mise en oeuvre par le convertisseur de tension continue 26 empêche tout courant excessif.

Après un temps de confirmation, le circuit de contrôle détermine que le défaut se trouve sur le bus de branche 20.

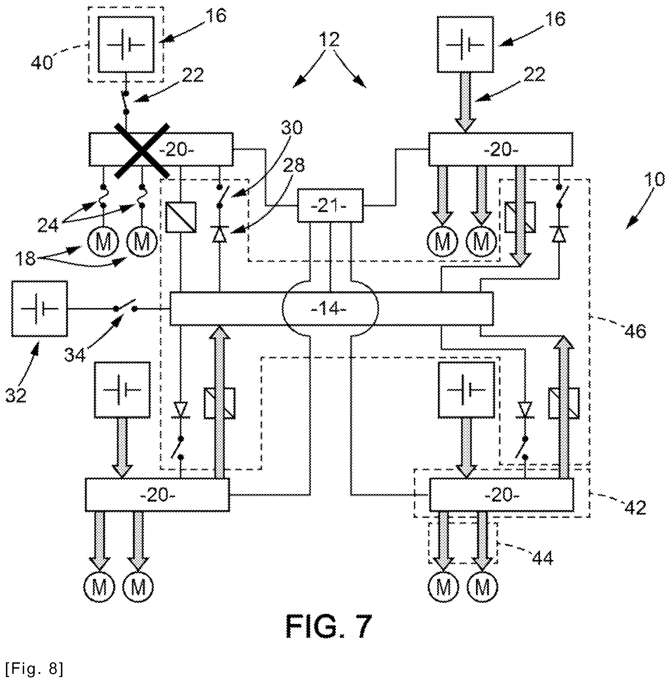

La branche 12 est alors isolée, comme représenté sur la figure 7, car il est impossible de relancer les dispositifs de propulsion 18 associés.

On décrit troisièmement un procédé de gestion de défaillance intervenant dans la région moteur 44.

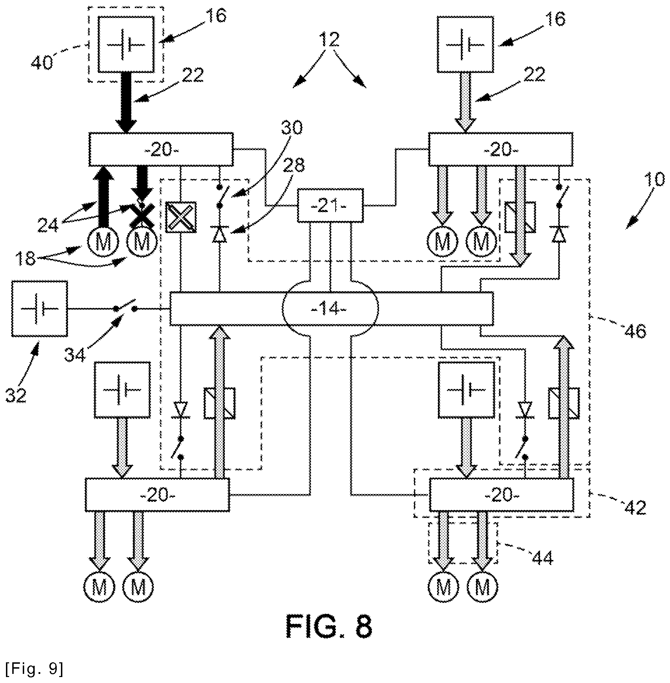

Dans ce cas, l'apparition d'une défaillance dans la ligne d'alimentation d'un des dispositifs de propulsion 18 entraîne l'apparition d'un sur-courant depuis la source 16 et le dispositif de propulsion 18 encore fonctionnel qui vide ses capacités d'entrée dans le court-circuit, comme représenté sur la figure 8.

Comme dans les cas précédents, l'isolation galvanique du convertisseur de tension 26 assure la non-propagation du court-circuit au reste du système 10.

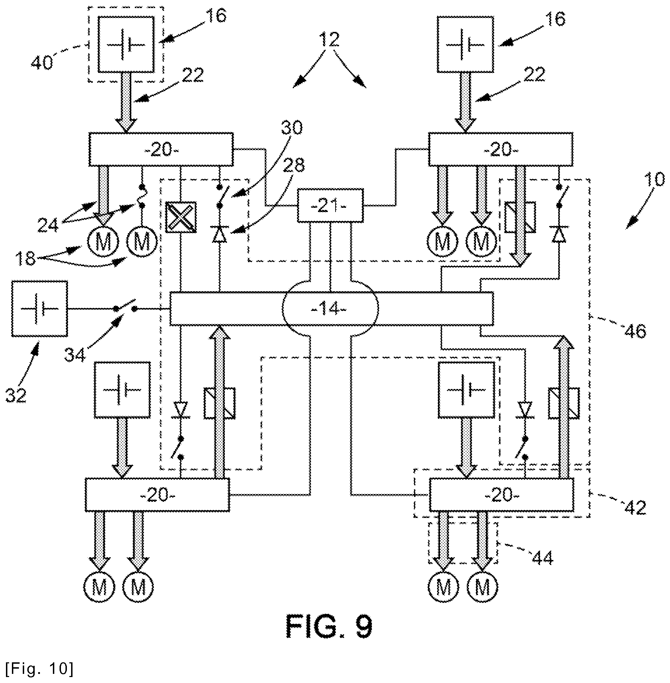

Les capteurs de courant et de tension permettent au circuit de contrôle 21 de discriminer le dispositif de propulsion 18 en défaut et de l'isoler du réseau, en déclenchant l'ouverture de l'organe de disjonction 24 correspondant, comme représenté sur la figure 9.

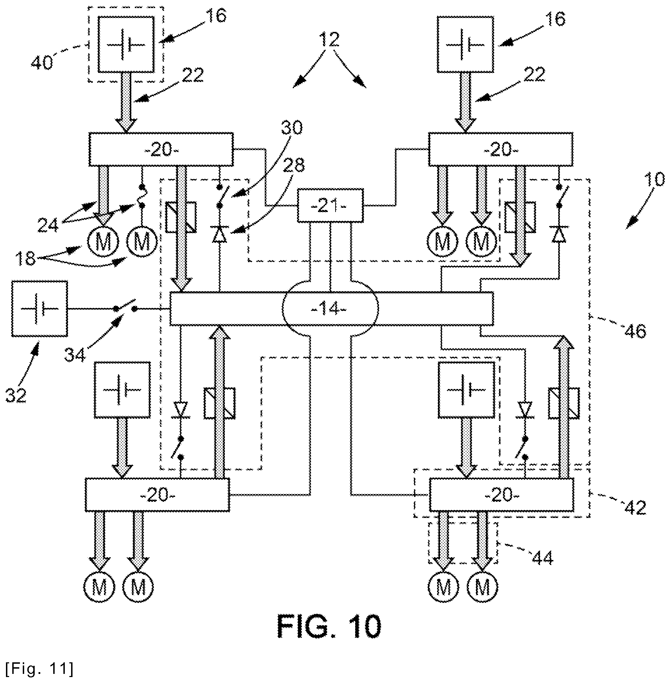

Une fois l'organe de disjonction 24 ouvert, la source 16 peut à nouveau fournir de la puissance électrique au dispositif de propulsion 18 restant de la banche 12, comme représenté figure 10. Une fois la tension revenue à niveau, le circuit de contrôle 21 relance la régulation du convertisseur de tension continue 26.

On décrit enfin un procédé de gestion de défaillance intervenant dans la région centrale 46.

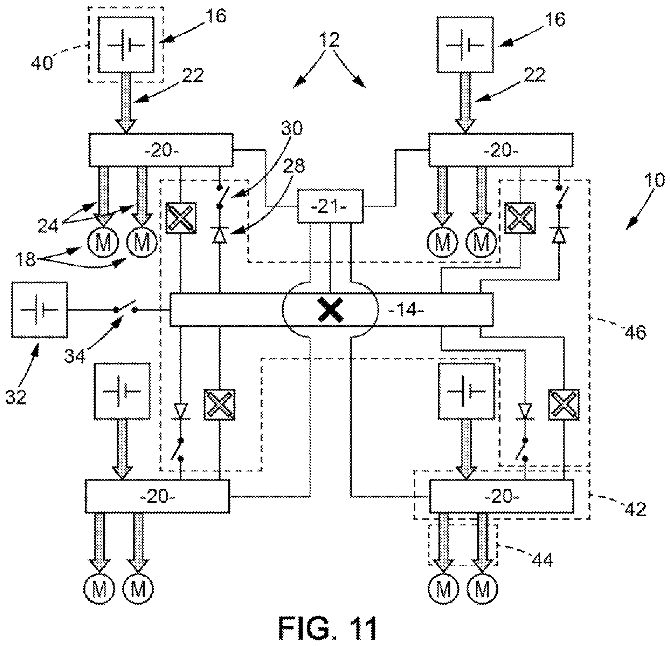

En cas de défaut électrique apparaissant sur le bus central 14, les convertisseurs de tension continue 26 stoppent leur régulation. Le circuit de contrôle 21 mesure une chute de tension importante en sortie de chaque convertisseur de tension continue 26, saturant ainsi leurs régulations et passant en mode dysfonctionnel, comme représenté figure 11.

Encore une fois, l'isolation galvanique de chaque convertisseur de tension continue 26 assure la non-propagation du défaut vers les branches 12, empêchant les sources 16 de délivrer du courant dans le défaut.

Dans ce cas, l'arrêt des convertisseurs de tension continue 26 est nécessaire et suffisant pour isoler le défaut.

Le système de propulsion 10 fonctionne alors comme un système à architecture ségréguée classique, laissant suffisamment d'énergie et de temps à l'aéronef pour atterrir en toute sécurité.

Dans les quatre cas de défauts présentés, le système conserve son intégrité et les dispositifs de propulsion restent fonctionnels, assurant à l'aéronef la capacité de réaliser de sa mission. L'architecture du système de propulsion 10 permet également de s'affranchir de protections contre les courants de court-circuit dimensionnées pour le nombre de sources 16 embarquées. La présence de convertisseur de tension continue 26 à isolation galvanique pourrait engendrer une augmentation significative de la masse, impactant la capacité de vol de l'aéronef. Cependant l'architecture de la présente invention minimise cet impact en permettant de dimensionner les convertisseurs non pas sur la puissance effective de chaque source, mais bien sur une puissance réduite, fonction du nombre de sources présentes.

## Revendications

1. Système (10) de propulsion électrique pour un aéronef, comprenant une pluralité de branches (12), chaque branche (12) comprenant :
- au moins une source (16) d'énergie électrique,
- au moins un dispositif de propulsion (18) électrique, et
- un bus de branche (20), connecté à chaque source (16) et à chaque dispositif de propulsion (18) de la branche (12),
le système (10) de propulsion comprenant de plus un bus central (14), **caractérisé en ce que** chaque branche (12) comprend un convertisseur de tension continue (28) connectant le bus de branche (20) au bus central (14), ledit convertisseur de tension continue (28) étant configuré pour isoler galvaniquement ledit bus de branche (20) du bus central (14).

2. Système (10) selon la revendication 1, dans lequel le système (10) comprend en outre une source de secours (32) d'énergie électrique connectée au bus central (14).

3. Système (10) selon l'une des revendications précédentes, dans lequel chaque dispositif de propulsion (18) est connecté à l'un des bus de branche (20) par l'intermédiaire d'un organe de disjonction (24).

4. Système (10) selon l'une des revendications précédentes, dans lequel chaque bus de branche (20) est connecté au bus central (14) par :
- un organe de commutation de branche (30) de type contacteur ou de type interrupteur de puissance à semi-conducteur, et
- une diode (28) présentant un sens passant orienté du bus central (14) vers le bus de branche (20),
l'organe de commutation de branche (30) et la diode (28) étant branchés en série entre le bus central (14) et le bus de branche (20), en parallèle du convertisseur de tension continue (26).

5. Système (10) selon l'une des revendications précédentes, dans lequel chaque source (16) est connectée au bus de branche (20) correspondant par l'intermédiaire d'un organe de commutation de source (22) de type contacteur ou de type interrupteur de puissance à semi-conducteur.

6. Système (10) selon la revendication précédente, comprenant un circuit de contrôle (31) configuré pour mettre en œuvre un procédé de gestion de défaillance en cas de défaillance dans le système (10).

7. Procédé de gestion de défaillance dans un système (10) de propulsion électrique pour aéronef selon l'une des revendications précédentes, comprenant des étapes de :
- prévention d'une propagation de la défaillance au moyen d'une isolation galvanique mise en œuvre par chaque convertisseur de tension continue (26),
- localisation de la défaillance et, si nécessaire, isolation d'une source (16) ou d'un dispositif de propulsion (18), et
- le cas échéant, précharge puis relance de dispositifs de propulsions (18) arrêtés.

8. Aéronef comprenant un système de propulsion électrique selon l'une des revendications 1 à 6.

## Patentansprüche

1. Elektrisches Antriebssystem (10) für Luftfahrzeuge, umfassend eine Vielzahl von Zweigen (12), wobei jeder Zweig (12) umfasst:
- zumindest eine elektrische Energiequelle (16),
- zumindest eine elektrische Antriebsvorrichtung (18) und
- einen Zweigbus (20), der mit jeder Quelle (16) und jeder Antriebsvorrichtung (18) des Zweigs (12) verbunden ist,
wobei das Antriebssystem (10) ferner einen zentralen Bus (14) umfasst,
**dadurch gekennzeichnet, dass** jeder Zweig (12) einen Gleichspannungswandler (28) umfasst, der den Zweigbus (20) mit dem zentralen Bus (14) verbindet, wobei der Gleichspannungswandler (28) dazu ausgelegt ist, den Zweigbus (20) galvanisch vom zentralen Bus (14) zu trennen.

2. System (10) nach Anspruch 1,
wobei das System (10) ferner eine elektrische Notstromquelle (32) umfasst, die mit dem zentralen Bus (14) verbunden ist.

3. System (10) nach einem der vorstehenden Ansprüche,
wobei jede Antriebsvorrichtung (18) über ein Abschaltelement (24) mit einem der Zweigbusse (20) verbunden ist.

4. System (10) nach einem der vorstehenden Ansprüche,
wobei jeder Zweigbus (20) mit dem zentralen Bus (14) verbunden ist über:
- ein Zweigschaltelement (30) vom Typ eines Schützes oder eines Halbleiter-Leistungsschalters und
- eine Diode (28) mit einer Durchlassrichtung vom zentralen Bus (14) zum Zweigbus (20),
wobei das Zweigschaltelement (30) und die Diode (28) in Reihe zwischen dem zentralen Bus (14) und dem Zweigbus (20) parallel zum Gleichspannungswandler (26) geschaltet sind.

5. System (10) nach einem der vorstehenden Ansprüche,
wobei jede Quelle (16) über ein Quellenschaltelement (22) vom Typ eines Schützes oder eines Halbleiter-Leistungsschalters mit dem entsprechenden Zweigbus (20) verbunden ist.

6. System (10) nach dem vorstehenden Anspruch,
umfassend eine Steuerschaltung (31), die dazu ausgelegt ist, im Falle eines Ausfalls im System (10) ein Fehlermanagementverfahren durchzuführen.

7. Verfahren zum Fehlermanagement in einem elektrischen Antriebssystem (10) für Luftfahrzeuge nach einem der vorstehenden Ansprüche, mit den folgenden Schritten:
- Verhindern einer Ausbreitung des Fehlers mittels einer galvanischen Trennung, die von jedem Gleichspannungswandler (26) ausgeführt wird,
- Lokalisieren des Fehlers und, falls erforderlich, Trennen einer Quelle (16) oder einer Antriebsvorrichtung (18), und
- gegebenenfalls Vorladen und anschließendes Neustarten von abgeschalteten Antriebsvorrichtungen (18).

8. Luftfahrzeug mit einem elektrischen Antriebssystem nach einem der Ansprüche 1 bis 6.

## Claims

1. An electrical propulsion system (10) for an aircraft, comprising a plurality of branches (12), each branch (12) comprising:
- at least one electrical power source (16),
- at least one electric propulsion device (18), and
- a branch bus (20), connected to each source (16) and to each propulsion device (18) of the branch (12),
the propulsion system (10) further comprising a central bus (14), **characterized in that** each branch (12) comprises a DC/DC voltage converter (28) connecting the branch bus (20) to the central bus (14), said DC/DC voltage converter (28) being configured to galvanically isolate said branch bus (20) from the central bus (14).

2. The system (10) as claimed in claim 1, wherein the system (10) further comprises a backup electrical power source (32) connected to the central bus (14).

3. The system (10) as claimed in one of the preceding claims, wherein each propulsion device (18) is connected to one of the branch buses (20) by a disconnection member (24).

4. The system (10) as claimed in one of the preceding claims, wherein each branch bus (20) connected to the central bus (14) by:
- a branch switching member (30) of contactor type or of power semiconductor switch type, and
- a diode (28) having a passing direction oriented from the central bus (14) toward the branch bus (20),
the branch switching member (30) and the diode (28) being connected in series between the central bus (14) and the branch bus (20), in parallel with the DC/DC voltage converter (26).

5. The system (10) as claimed in one of the preceding claims, wherein each source (16) is connected to the corresponding branch bus (20) by a source switching member (22) of contactor type or of power semiconductor switch type.

6. The system (10) as claimed in the preceding claim, comprising a control circuit (31) configured to implement a fault management method in the event of a fault in the system (10).

7. A method for managing faults in an electrical propulsion system (10) for aircraft as claimed in one of the preceding claims, comprising steps of:
- preventing propagation of the fault by means of galvanic isolation implemented by each DC/DC voltage converter (26),
- locating the fault and, if necessary, isolating a source (16) or a propulsion device (18), and
- where applicable, precharging then restarting propulsion devices (18) which have stopped.

8. An aircraft comprising an electrical propulsion system as claimed in one of claims 1 to 6.
